# EUROPÄISCHE PATENTSCHRIFT

(11) **EP 0 681 167 B1**
(45) Veröffentlichungstag und Bekanntmachung des Hinweises auf die Patenterteilung: **08.10.1997**
(21) Anmeldenummer: 95104700.0
(22) Anmeldetag: 30.03.1995
(51) Int. Cl.: G01K 17/16, G01F 1/12, G06F 7/68

(54) **Rechenwerk für elektronische Wärmemengenzähler**
Calculating circuit for an electronic heat quantity counter
Unité de calcul arithmétique pour un compteur de quantités de chaleur éléctronique

(30) Priorität: 27.04.1994 DE 4414652
(43) Veröffentlichungstag der Anmeldung: 08.11.1995
(73) Patentinhaber: SPANNER-POLLUX GmbH, D-67063 Ludwigshafen (DE)
(72) Erfinder: Blumbach, Rainer, Dr. Dipl.-Ing., D-67122 Altrip (DE); Sobel, Klaus, Dipl.-Phys., D-69493 Hirschberg (DE)
(74) Vertreter: Patentanwälte Möll und Bitterich

(56) Entgegenhaltungen:
- EP-A- 0 132 374
- DE-A- 2 134 284
- DE-B- 1 524 219
- FR-A- 2 476 834
- GB-A- 2 050 660
- GB-A- 2 176 014
- US-A- 3 895 529
- US-A- 3 965 341
- US-A- 4 112 492
- US-A- 4 120 032
- US-A- 4 404 638

## Beschreibung

Die Erfindung betrifft Rechenwerke mit Multiplizierschaltung und Anzeige für elektronische Wärmemengenzähler gemäß dem Oberbegriff des Anspruchs 1.

Elektronische Wärmemengenzähler, wie sie beispielsweise in Heizungsanlagen verwendet werden, um die verbrauchte Wärmeenergie zu zählen, weisen drei wesentliche Bestandteile auf: wenigstens einen Temperaturfühler, mit dessen Hilfe die Temperaturdifferenz des Wärmemediums, meist Wasser, bestimmt wird, ein Volumenmeßwerk, mit dessen Hilfe die Menge des Wärmemediums gemessen wird, und ein Rechenwerk, in dem aus dem Produkt von Temperaturdifferenz und Volumen die verbrauchte Wärmeenergie errechnet, aufaddiert und angezeigt wird. Eine solche Vorrichtung ist in der GB-A-2 050 660 offenbart.

Die Volumenmeßgeräte geben Meßimpulse ab, wobei je nach der Nenngröße des Volumenmeßgeräts ein Meßimpuls einem Volumen von 1 l, 10 l, 100 l oder 1000 l entsprechen kann. Auch Zwischenwerte sind denkbar.

Entsprechend der Zehner-Wertigkeiten der Volumenimpulse unterscheiden sich die angezeigten Wärmemengenwerte jeweils um den Faktor 10. Dem wurde bisher dadurch Rechnung getragen, daß die Multiplizierschaltung und die Anzeige für alle oben beispielhaft genannten Impulswertigkeiten von 1 l, 10 l, 100 l, 1000 l zunächst vollkommen identisch hergestellt wurden, daß dann aber für die verschiedenen Impulswertigkeiten jeweils verschiedene Masken herstellerseitig auf die Anzeige aufgebracht wurden, die eine bestimmte der oben genannten Impulswertigkeiten und dazu entsprechend den Dezimalpunkt an der richtigen Dezimalstelle der (Wärmemengen-) Anzeige enthalten haben.

Da ein Wärmezähler neben dem geeichten Rechenwerk das geeichte Temperaturfühlerpaar und ein geeichtes Volumenmeßwerk umfaßt, mußte auf der Baustelle vom Monteur auf die übereinstimmende Impulswertigkeit des Rechenwerks und des Volumenmeßwerks geachtet werden; waren Volumenmeßwerk und Rechenwerk auf der Baustelle nicht mit gleicher Impulswertigkeit vorhanden, konnte die Wärmemeßanlage nicht komplett montiert werden, obwohl - wie oben beschrieben - die Rechenwerke bis auf die Maske für die verschiedenen Impulswertigkeiten absolut identisch sind. Die so notwendige Vorgehensweise führte teilweise zu erheblichen Beeinträchtigungen der Montage auf der Baustelle.

Hier setzt nun die vorliegende Erfindung ein, der die Aufgabe zugrundeliegt, ein Rechenwerk der eingangs genannten Art für Wärmemengenzähler, deren Komponenten erst vor Ort zusammengeschaltet werden, anzugeben, das an das jeweils verwendete Volumenmeßwerk anpaßbar ist, wobei gleichzeitig eine große Sicherheit gegen Fehlbedienung gegeben ist.

Aus der GB-A-2 176 014 ist es bekannt, die Impuls Folge am Ausgang eines Stromzählers mit einem Frequenzteiler an verschiedene Einsatzbereiche anzupassen.

Die oben genannte Aufgabe wird gelöst durch ein Rechenwerk mit den Merkmalen des Anspruchs 1.

Dank der Einstellbarkeit des Multiplikationsfaktors, vorzugsweise in Zehnerschritten, läßt sich das Rechenwerk vor Ort leicht an das jeweilige Volumenmeßwerk anpassen. Für die Sicherheit der Anpassung ist der auf den Steckverbinder des Rechenwerks aufgesteckte Vorbereitungsstecker in Verbindung mit dem im Rechenwerk vorgesehenen Umschalter verantwortlich. Das Rechenwerk besitzt einen sogenannten Vorbereitungsmodus und den eigentlichen Arbeitsmodus. Herstellerseitig wird das Rechenwerk zunächst in den Vorbereitungsmodus gebracht, der mit Hilfe des aufgesetzten Vorbereitungssteckers fixiert wird. Der Multiplikationsfaktor läßt sich nur im Vorbereitungsmodus programmieren. Zum Verbinden des Rechenwerks mit dem Volumenmeßwerk muß der Vorbereitungsstecker abgezogen werden. Dabei kippt der Umschalter und das Rechenwerk geht in den Arbeitsmodus, in dem eine Veränderung des Multiplikationsfaktors nicht mehr möglich ist, so daß eine spätere Manipulation ausgeschlossen ist. Aus dem Arbeitsmodus kann das Rechenwerk auch nicht durch Wiederaufstecken des Vorbereitungssteckers in den Vorbereitungsmodus zurückgebracht werden. Dies ist nur herstellerseitig möglich.

Grundsätzlich besteht die Möglichkeit, Rechenwerk und Volumenmeßwerk mit Steck- oder mit Schraubklemmen miteinander zu verbinden. Sind Steckklemmen vorgesehen, empfiehlt es sich, den Vorbereitungsstecker direkt auf diese Steckklemmen aufzustecken. Sind Schraubklemmen oder dergleichen vorgesehen, empfiehlt es sich, den Vorbereitungsstecker mit einer Schürze oder Nase auszurüsten, die den Zugang zu den Verbindungsklemmen erst nach Abziehen des Vorbereitungssteckers freigibt.

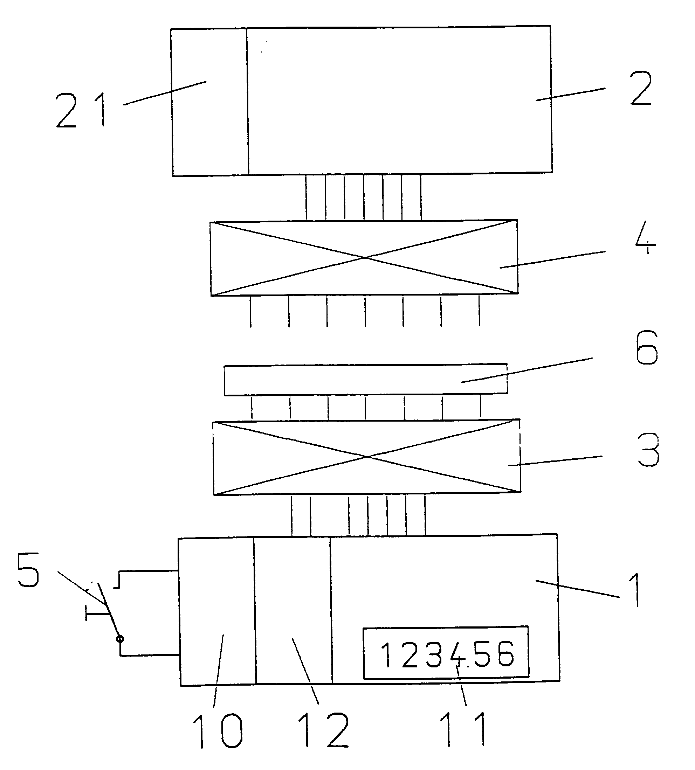

Anhand der Zeichnung soll die Erfindung in Form eines Blockdiagramms näher erläutert werden. Man erkennt ein Rechenwerk 1 eines Wärmemengenzählers mit einer Multiplizierschaltung 10, einer Wärmemengenanzeige 11 und einem Umschalter 12. Das Rechenwerk 1 besitzt einen Steckverbinder 3. Ferner ist ein externer Programmierschalter 5 vorgesehen, mit dessen Hilfe der Multiplikationsfaktor der Multiplizierschaltung 10 in Stufen eingestellt werden kann.

Des weiteren zeigt die Zeichnung ein Volumenmeßwerk 2 mit einem eingebauten Impulsgeber 21. Dieser gibt Meßimpulse ab, deren Wertigkeit je nach der Nenngröße des Volumenmeßwerks einem Volumen von 1 l, 10 l, 100 l oder 1000 l entsprechen kann. Auch am Volumenmeßwerk 2 ist ein Steckverbinder 4 vorgesehen. Dieser paßt auf den Steckverbinder 3 des Rechenwerks 1.

Auf den Steckverbinder 3 des Rechenwerks 1 ist herstellerseitig ein Vorbereitungsstecker 6 aufgesteckt. Dieser hält den Umschalter 12 in dem herstellerseitig eingestellten Vorbereitungsmodus. In diesem Modus läßt sich der Multiplikationsfaktor der Multiplizierschaltung 10 einstellen, wobei der Faktor auf der Anzeige 11 abgelesen werden kann. Ansonsten ist das Rechenwerk 1 abgeschaltet.

Vor dem Zusammenstecken der beiden Steckverbinder 3, 4 muß der Vorbereitungsstecker 6 abgezogen werden. Dabei kippt der Umschalter 12 und das Rechenwerk 1 geht in den eigentlichen Arbeitsmodus, in dem es auch bleibt, wenn der Vorbereitungsstecker 6 wieder aufgesteckt werden sollte. Im Arbeitsmodus kann der Multiplikationsfaktor nicht mehr verstellt werden; das Rechenwerk 1 errechnet aus Temperaturdifferenz und Volumen die verbrauchte Wärmemenge.

Es besteht ferner die Möglichkeit, das Umkippen des Umschalters 12 aus dem Vorbereitungsmodus in den Arbeitsmodus zusätzlich davon abhängig zu machen, daß der Programmierschalter 6 betätigt worden war, so daß das Rechenwerk 1 seine Arbeit nur dann aufnimmt, wenn ein Multiplikationsfaktor einprogrammiert wurde.

## Patentansprüche

1. Rechenwerk (1) mit Multiplizierschaltung (10) und Anzeige (11) für elektronische Wärmemengenzähler, die außerdem noch ein Volumenmeßwerk (2) mit Volumenimpulsgeber (21) und wenigstens einen Temperaturfühler umfassen, wobei wenigstens das Rechenwerk (1) und das Volumenmeßwerk (2) miteinander verbindbar sind, dadurch gekennzeichnet, daß der Multiplikationsfaktor der Multiplizierschaltung (10) in Stufen einstellbar ist, daß auf das Rechenwerk (1) herstellerseitig ein Vorbereitungsstecker (6) aufgesteckt ist, daß das Rechenwerk (1) einen Umschalter (12) enthält, der herstellerseitig in einen Vorbereitungsmodus gebracht ist, daß der Multiplikationsfaktor nur im Vorbereitungsmodus einstellbar ist und daß nach dem ersten Abziehen des Vorbereitungssteckers (6) der Umschalter (12) kippt und das Rechenwerk (1) in seinen Arbeitsmodus geht.

2. Rechenwerk nach Anspruch 1, dadurch gekennzeichnet, daß Rechenwerk (1) und Volumenmeßwerk (2) über einen Steckverbinder (3) miteinander verbindbar sind und daß der Vorbereitungsstecker (6) auf den Steckverbinder (3) des Rechenwerks (1) aufgesteckt ist.

3. Rechenwerk nach Anspruch 1, dadurch gekennzeichnet, daß der Vorbereitungsstecker (6) eine Schürze oder Nase besitzt, die den Zugang zu den Steck- oder Schraubklemmen zum Verbinden des Volumenmeßwerks (2) bei aufgestecktem Vorbereitungsstecker (6) verhindert.

4. Rechenwerk nach einem der Ansprüche 1 bis 3, dadurch gekennzeichnet, daß ein externer Programmierschalter (5) bzw. ein entsprechender Eingang vorgesehen ist.

5. Rechenwerk nach einem der Ansprüche 1 bis 4, dadurch gekennzeichnet, daß der Multiplikationsfaktor in 10er Schritten einstellbar ist.

## Claims

1. Arithmetic unit (1) with a multiplication circuit (10) and a display (11) for electronic heat meters, which also comprise a volume meter (2) with a volume pulse generator (21) and at least one temperature sensor, wherein at least the arithmetic unit (1) and the volume meter (2) can be connected together, characterised in that the multiplication factor of the multiplication circuit (10) can be adjusted in steps, that an initialisation plug (6) is plugged into the arithmetic unit (1) by the manufacturer, that the arithmetic unit (1) comprises a change-over switch (12) which is brought into initialisation mode by the manufacturer, that the multiplication factor can only be adjusted in initialisation mode, and that following the first withdrawal of the initialisation plug (6) the change-over switch (12) flips over and the arithmetic unit (1) goes into its operating mode.

2. Arithmetic unit according to claim 1, characterised in that the arithmetic unit (1) and the volume meter (2) can be connected together by a plug and socket connector (3), and that the initialisation plug (6) is plugged into the plug and socket connector (3) of the arithmetic unit (1).

3. Arithmetic unit according to claim 1, characterised in that the initialisation plug (6) has an apron or a lug which prevents access to the plug or screw terminals for connecting the volume meter (2) when the initialisation plug (6) is plugged in.

4. Arithmetic unit according to one of claims 1 to 3, characterised in that an external programming switch (5) or a corresponding input is provided.

5. Arithmetic unit according to one of claims 1 to 4, characterised in that the multiplication factor can be adjusted in decimal steps.

## Revendications

1. Unité de calcul (1) comportant un circuit multiplicateur (10) et un affichage (11) pour des compteurs électroniques de quantités de chaleur qui comportent encore en outre un volumètre (2) avec un générateur d'impulsions de volume (21) et au moins un capteur de température, au moins l'unité de calcul (1) et le volumètre (2) pouvant être reliés l'un à l'autre, caractérisée en ce que le facteur de multiplication du circuit multiplicateur (10) est réglable par pas, en ce qu'un connecteur préparatoire (6) est embroché sur l'unité de calcul (1) par le constructeur, en ce que l'unité de calcul (1) comporte un commutateur (12) qui est mis par le constructeur dans un mode préparatoire, en ce que le facteur de multiplication ne peut être réglé qu'en mode préparatoire et en ce qu'après le retrait du connecteur préparatoire (6), le commutateur (12) bascule et l'unité de calcul (1) passe en mode de fonctionnement.

2. Unité de calcul selon la revendication 1, caractérisée en ce que l'unité de calcul (1) et le volumètre (2) peuvent être reliés l'un à l'autre par l'intermédiaire d'un connecteur (3) et en ce que le connecteur préparatoire (6) est embroché sur le connecteur (3) de l'unité de calcul (1).

3. Unité de calcul selon la revendication 1, caractérisée en ce que le connecteur préparatoire (6) a un tablier ou un taquet qui, dans le cas où le connecteur préparatoire (6) est embroché, empêche l'accès aux bornes à fiche ou à vis pour la connexion avec le volumètre (2).

4. Unité de calcul selon l'une quelconque des revendications 1 à 3, caractérisée en ce qu'un commutateur de programmation (5) externe ou une entrée correspondante est prévu(e).

5. Unité de calcul selon l'une quelconque des revendications 1 à 4, caractérisé en ce que le facteur de multiplication peut être réglé sur décimales pas.
